(19) Europäisches Patentamt
European Patent Office
Office européen des brevets

(11) **EP 4 357 162 B1**

(12) **EUROPEAN PATENT SPECIFICATION**

(45) Date of publication and mention
of the grant of the patent:
**28.01.2026 Bulletin 2026/05**

(51) International Patent Classification (IPC):
**B60C 11/03** (2006.01)    **B60C 11/12** (2006.01)

(52) Cooperative Patent Classification (CPC):
**B60C 11/03; B60C 11/0306; B60C 11/11;
B60C 11/12; B60C 11/1236;** Y02T 10/86

(21) Application number: **22824586.6**

(22) Date of filing: **22.03.2022**

(86) International application number:
**PCT/JP2022/013110**

(87) International publication number:
**WO 2022/264590 (22.12.2022 Gazette 2022/51)**

(54) **TIRE**

**REIFEN**

**PNEU**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.06.2021 JP 2021101627**

(43) Date of publication of application:
**24.04.2024 Bulletin 2024/17**

(73) Proprietor: **BRIDGESTONE CORPORATION
Chuo-ku
Tokyo 104-8340 (JP)**

(72) Inventor: **HAYASHI, Shintaro
Tokyo 104-8340 (JP)**

(74) Representative: **Marks & Clerk LLP
15 Fetter Lane
London EC4A 1BW (GB)**

(56) References cited:
**EP-A1- 2 546 076        EP-A1- 2 546 078
WO-A1-2012/018081    JP-A- 2000 108 615
JP-A- 2001 191 739      JP-A- 2001 322 408
JP-A- 2002 283 812      JP-A- 2007 106 314
JP-A- 2010 208 616      JP-A- 2010 247 708
JP-A- 2016 210 199      JP-A- 2018 034 692
JP-A- 2020 199 911      JP-U- H0 451 805
US-A- 4 676 290**

**Description**

TECHNICAL FIELD

The present invention relates to a tire that utilizes a tread pattern with blocks having a relatively small ground area are densely disposed.

BACKGROUND ART

Conventionally, a method of utilizing a tread pattern with blocks having a relatively small ground area are densely disposed is known for a winter tire (hereinafter denoted as "tire") suitable for traveling on an ice and snow road surface (see PTL 1). Attention is drawn to the disclosures of US 4676290 A, EP 2546078 A1 and EP 2546076 A1.
The tread pattern in which such small blocks are densely disposed has a better ground contact characteristics with the ice and snow road surface than blocks of a general size, and therefore can improve traveling performance on the ice and snow road surface (hereinafter denoted as "on-ice performance").

CITATION LIST

PATENT LITERATURE

PTL 1: JP 2017-193202 A

SUMMARY OF INVENTION

However, further improvement is required for the conventional tire described above. Specifically, it is required to further improve on-ice performance, especially braking performance on snow and ice roads when driving straight.
Therefore, an object of the present invention is to provide a tire that further improves braking performance on snow and ice roads when driving straight when utilizing a tread pattern with blocks having a relatively small ground area are densely disposed.
A tire according to an embodiment of the present invention includes a block group delimited by a pair of circumferential grooves extending in a tire circumferential direction. The block group includes a plurality of blocks delimited by a plurality of lateral grooves extending in a tire width direction. Each block of the plurality of blocks is partitioned into a plurality of small blocks by a circumferential sipe extending in the tire circumferential direction and a plurality of lateral sipes extending in the tire width direction. In each block of the plurality of blocks, the circumferential sipe extends in a zigzag pattern, and at least outermost lateral sipes of the plurality of lateral sipes in the tire circumferential direction extend parallel to each other. A shape of each small block in the plurality of small blocks is a polygon bounded by at least four sides in a tread plane view. The plurality of small blocks comprises a first small block with a hexagonal shape in the tread plane view.
In a tire having the above configuration, each block included in the block group is partitioned into small blocks by the circumferential sipes in a zigzag shape and the plurality of lateral sipes. In this configuration, each small block not only supports the adjacent small blocks in the tire circumferential direction but also supports the adjacent small blocks in the tire width direction during braking, thereby increasing a flexural rigidity of each block in the tire circumferential direction. By increasing the flexural rigidity, the ground contact characteristics of the tire during braking is improved.
Therefore, according to the tire described above, in the case where a tread pattern with blocks having a relatively small ground area are densely disposed is utilized, the braking performance on a snow and ice road when traveling straight can be further improved.

BRIEF DESCRIPTION OF DRAWINGS

[FIG. 1] FIG. 1 is a partial plan view of a tread of a pneumatic tire 10.
[FIG. 2] FIG. 2 is a partial enlarged plan view of a tread 20.
[FIG. 3] FIG. 3 is a partial cross-sectional view of a block 100 including a circumferential sipe 120 (lateral sipe 130) along a sipe width direction and a tire radial direction TR.
[FIG. 4] FIG. 4 is a partial plan view of a tread of a pneumatic tire 10A according to a variant 1.
[FIG. 5] FIG. 5 is a partial plan view of a tread of a pneumatic tire 10B according to a variant 2.
[FIG. 6] FIG. 6 is a partial plan view of a tread of a pneumatic tire 10C according to a variant 3.
[FIG. 7] FIG. 7 is a partial plan view of a tread of a pneumatic tire 10D according to a variant 4.

[FIG. 8] FIG. 8 is a partial plan view of a tread of a pneumatic tire 10E according to a variant 5.

MODES FOR CARRYING OUT THE INVENTION

Hereinafter, one or more embodiments will be described based on the drawings. The same functions and structures are denoted by the same or similar reference numerals, and the description thereof will be omitted accordingly.

(1)Overall schematic structure of tire

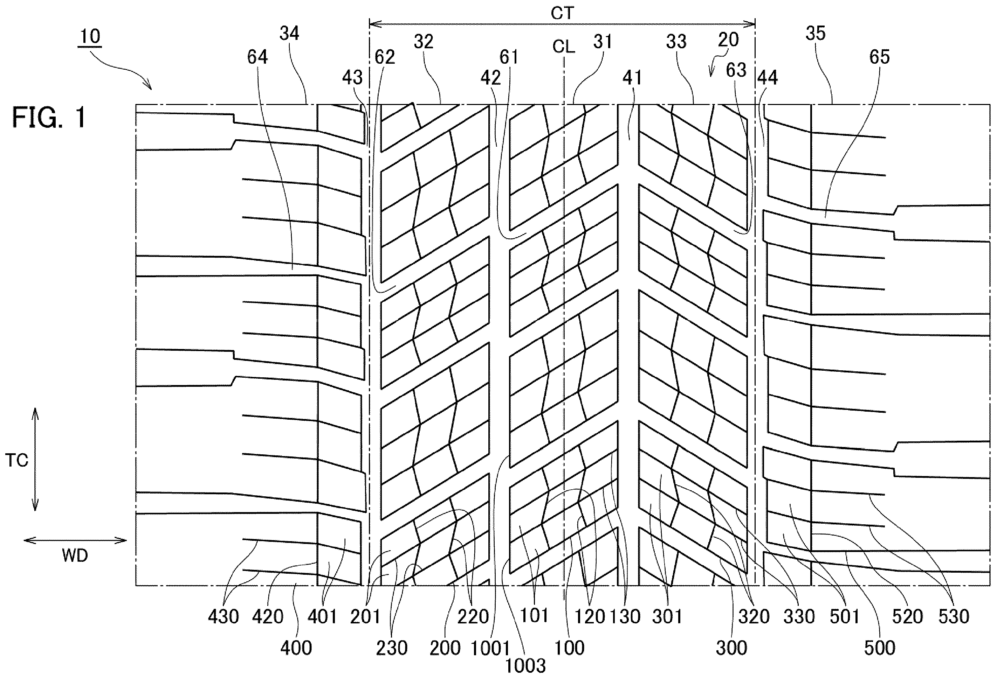

FIG. 1 is a partial plan view of a tread of a pneumatic tire 10 not according to the invention, but useful for understanding the invention.
The pneumatic tire 10 is a so-called winter tire configured to travel on an ice and snow surface, specifically, an ice surface and a snow surface, and is also called a studless tire. The pneumatic tire 10 may be an all-season tire configured to travel on a non-ice/snow road surface (a wet road surface and a dry road surface) and an ice/snow road surface. Alternatively, the pneumatic tire 10 may be a general summer tire rather than a winter tire or an all-season tire.
In addition, the type of vehicle in which the pneumatic tire 10 is mounted may be mainly, but not particularly limited, a passenger automobile (which may include an SUV and a minivan).
For the pneumatic tire 10, a tread pattern with blocks having a relatively small ground area are densely disposed is utilized.
Specifically, as illustrated in FIG. 1, the pneumatic tire 10 includes block rows 31,32,33, 34, and 35 extending in a tire circumferential direction TC. Specifically, the pneumatic tire 10 includes block rows 31,32, and 33, each of the block rows is a block group and is delimited by a pair of circumferential grooves 41,42,43, and 44 adjacent to each other, and block rows 34 and 35, each of the block rows is delimited by circumferential grooves 43,44 and a tread end.
A tread 20 is a part to be in contact with a road surface. A tread pattern is formed on the tread 20 according to the use environment of the pneumatic tire 10 and a type of vehicle to be mounted.
The block row 31 is provided on the tread 20 at a position including a tire equatorial line CL, and the block row 32 and the block row 33 are provided on an outer side of the block row 31 in a tire width direction.
The block row 34 is provided on an outer side of the block row 32 in the tire width direction, and the block row 35 is provided on an outer side of the block row 33 in the tire width direction.
The block row 31 is delimited by a pair of circumferential grooves extending in the tire circumferential direction TC, specifically, the circumferential groove 41 and the circumferential groove 42.
The block row 32 is delimited by the circumferential groove 42 and the circumferential groove 43. The block row 33 is delimited by the circumferential groove 41 and the circumferential groove 44. The block row 34 and the block row 35 are provided in a shoulder region of the tread 20, and no circumferential groove is formed on an outer side in the tire width direction thereof.

(2)Shape of blocks

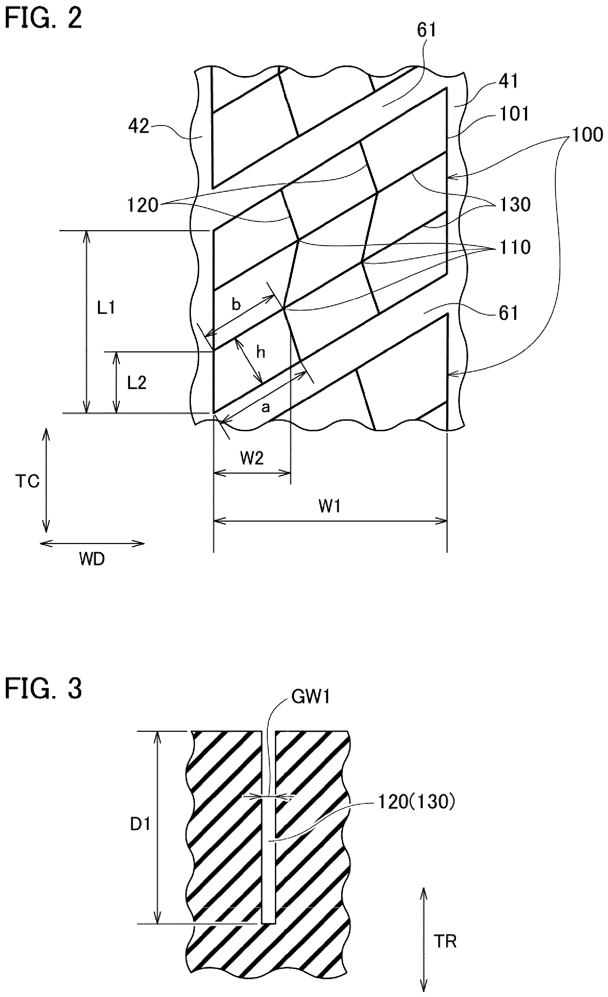

FIG. 2 is a partially enlarged plan view of the tread 20. As described above, the tread 20 is provided with the plurality of block rows extending in the tire circumferential direction TC, and each of the block rows includes a plurality of blocks that contacts the road surface.
Specifically, the block rows include a plurality of blocks delimited by a plurality of lateral grooves extending in the tire width direction WD. Specifically, the block row 31 include blocks 100. The block row 32 include blocks 200. Block row 33 includes blocks 300. Block row 34 includes blocks 400. Block row 35 includes blocks 500.
The blocks 100 are delimited by lateral grooves 61. The blocks 200 are delimited by lateral grooves 62. The blocks 300 are delimited by lateral grooves 63. The blocks 400 are delimited by lateral grooves 64. The blocks 500 are delimited by lateral grooves 65.
A length of a block 100 in the tire circumferential direction TC of the blocks 100 in the block row 31 may not all be the same length. The blocks 100, delimited by the lateral grooves 61 extending parallel to each other, are arranged alternately in the tire circumferential direction with a block 1001 having a longer length in the tire circumferential direction and a block 1003 having a shorter length in the tire circumferential direction.
The block rows 32 and 33 have substantially the same shape as the block rows 31.
Specifically, in the block row 32, the blocks 200 delimited by the lateral grooves 62 are arranged alternately in the tire circumferential direction with a block having a longer length in the tire circumferential direction and a block having a shorter length in the tire circumferential direction. Similarly, in the block row 33, the blocks 300 delimited by the lateral grooves 63 are arranged alternately in the tire circumferential direction with a block having a longer length in the tire circumferential direction and a block having a shorter length in the tire circumferential direction.
The blocks 100 are partitioned into a plurality of small blocks 101 by circumferential sipes 120 extending in the tire circumferential direction TC and lateral sipes 130 extending in the tire width direction WD.

Specifically, the block 100 is partitioned into nine small blocks 101 by two circumferential sipes 120 and two lateral sipes 130.

In this embodiment not according to the invention, but useful for understanding the present invention, each end of the lateral sipes 130 communicates with one of the circumferential grooves. Specifically, the ends of the lateral sipes 130 communicates with the circumferential grooves 41 and 42.

The circumferential sipes 120 extend in a zigzag shape. Both ends of the circumferential sipes 120 communicate with the lateral grooves 61 adjacent to the block 100.

Further, the lateral grooves 61 and the lateral sipes 130 are inclined with respect to the tire width direction WD. The lateral grooves 61 and the lateral sipes 130 are parallel in the tread plane view. That is, the inclination angle of the lateral groove 61 with respect to the tire width direction WD and the inclination angle of the lateral sipe 130 with respect to the tire width direction WD are the same.

In this embodiment not according to the invention, but useful for understanding the present invention, the lateral sipe 130 and the circumferential sipe 120 intersect at a position where the circumferential sipe 120 having a zigzag shape bends.

A shape of each small block 101 delimited by the circumferential sipe 120 and the lateral sipe 130 in the tread plane view may be a polygon bounded by at least four sides. In this embodiment, the small block 101 is quadrangular. Specifically, the small block 101 is delimited in the tire circumferential direction TC by a plurality of lateral sipes 130 parallel to each other or a lateral groove 61 formed parallel to the lateral sipes 130. The small block 101 is delimited in the tire width direction WD by the circumferential sipes 120 parallel to each other or the circumferential grooves 41 and 42. Therefore, the small block 101 adjacent to the circumferential grooves 41 and 42 is formed in columnar shape having a trapezoidal shape in the tread plane view, and the small block 101 in which both ends of the tire width direction WD are delimited by the circumferential sipes 120 is formed in columnar shape having a parallelogram shape in the tread plane view.

At least the blocks 200,300 have shapes similar to the blocks 100.

Specifically, the blocks 200 are partitioned into nine small blocks 201 by two circumferential sipes 220 and two lateral sipes 230.

Ends of the lateral sipes 230 communicate with the circumferential grooves 42 and 43. The circumferential sipes 220 extend in a zigzag shape. The circumferential sipes 220 communicate with the lateral grooves 62 adjacent to the block 200 without directly communicating with the circumferential grooves 42 and 43 adjacent to the block 200.

The lateral grooves 62 and the lateral sipes 230 are inclined with respect to the tire width direction WD. The lateral grooves 62 and the lateral sipes 230 are parallel in the tread plane view.

In the present embodiment not according to the invention, but useful for understanding the invention, the lateral sipe 230 and the circumferential sipe 220 intersect at a position where the circumferential sipe 220 having zigzag shape bends.

The block 300 is partitioned into nine small blocks 301 by two circumferential sipes 320 and two lateral sipes 330.

Ends of the lateral sipes 330 communicate with the circumferential grooves 41 and 44. The circumferential sipes 320 extend in a zigzag shape. The circumferential sipes 320 communicate with the lateral grooves 63 adjacent to the blocks 300 without directly communicating with the circumferential grooves 41 and 44 adjacent to the block 200.

The lateral grooves 63 and the lateral sipes 330 incline in the opposite directions to the lateral grooves 61 and the lateral sipes 130 with respect to the tire width direction WD. Further, the lateral groove 63 and the lateral sipe 330 are parallel in the tread plane view.

Further, the lateral sipe 330 and the circumferential sipe 320 intersect at a position where the circumferential sipe 320 having zigzag shape bends.

As illustrated in FIG. 1, in the pneumatic tire 10, the block row 31 including a parallelogram-shaped block 100 having the quadrilateral small block 101 with columnar shape, the block row 32 including a parallelogram-shaped block 200 having the quadrilateral small block 201 with columnar shape, and the block row 33 including a parallelogram-shaped block 300 having the quadrilateral small block 301 with columnar shape are provided only in a center portion CT delimited by a pair of circumferential grooves 43 and 44 positioned outermost in the tire width direction disposed on either side of the tire equatorial line CL.

The block 400 is partitioned into six small blocks 401 by one circumferential sipe 420 and two lateral sipes 430.

An inner end of the lateral sipe 430 in the tire width direction communicates with the circumferential groove 43. An end of the circumferential sipe 420 communicates with the lateral groove 64 formed adjacent to the block 400.

The circumferential sipe 420 formed in the block 400 including the tread end extends linearly along the tire circumferential direction TC. The lateral sipe 430 arranged in the block 400 bends at an intersection with the circumferential sipe 420.

The lateral groove 64 and the lateral sipe 430 are inclined with respect to the tire width direction WD. As illustrated in FIG. 1, parts of the lateral groove 64 and the lateral sipe 430 on the circumferential groove 43 side may be inclined further than other parts.

The block 500 is also partitioned into six small blocks 501 by one circumferential sipe 520 and two lateral sipes 530.

An inner end of the lateral sipe 530 in the tire width direction communicates with the circumferential groove 44. An end of the circumferential sipe 520 communicates with the lateral groove 65 formed adjacent to the block 500.

The circumferential sipe 520 formed in the block 500 including the tread end extends linearly along the tire circumferential direction TC. The lateral sipe 530 arranged in the block 400 bends at an intersection with the circumferential sipe 520.

The lateral groove 65 and the lateral sipe 530 are inclined with respect to the tire width direction WD. As illustrated in FIG. 2, a part of the lateral groove 65 and the lateral sipe 530 on the circumferential groove 43 side may be inclined further than other parts.

As illustrated in FIG. 1, the block 400 and the block 500 have a shape that is symmetrical to a point.

(3)Cross sectional shape of circumferential sipe and lateral sipe

FIG. 3 is a partial cross sectional view of the block 100 including the circumferential sipe 120 or the lateral sipe 130 along a sipe width direction and a tire radial direction TR.

The circumferential sipes 220,320 formed at least in the blocks 200,300 have cross sectional shapes similar to that of the circumferential sipe 120 formed in the blocks 100. The lateral sipes 230, 330 have cross sectional shapes similar to that of the lateral sipe 130.

As illustrated in FIG. 3, in this embodiment not according to the invention, but useful for understanding the invention, the circumferential sipe 120 has a constant groove width GW1 from the tread side to the bottom. The lateral sipe 130 also has a constant groove width GW1 from the tread side to the bottom. Specifically, cross-sectional shapes in cross sections along the sipe width direction and the tire radial direction TR of the circumferential sipe 120 and the lateral sipe 130 are formed such that the sipe wall surfaces extend linearly along the tire radial direction TR and have substantially parallel groove walls.

The sipe is a fine groove in the block configured to close when the block is grounded. A width of the sipe in a non-grounded state is preferably, but not particularly limited to, 0.1 mm to 1.5 mm, and more preferably 0.4 mm to 0.7 mm.

Depth D1 of the circumferential sipe 120 and the lateral sipe 130 are set to be about 5.0 mm, and the groove width GW1 are set to be about 0.4 mm.

(4) Dimensions and flexural rigidity of the block

Since the blocks 200,300 have shapes generally similar to that of the block 100 as described above, the dimensions and flexural rigidity of the blocks will now be described with reference to the block 100 illustrated in FIG. 2.

As illustrated in FIG. 2, a dimension W1 of the block 100 along the tire width direction WD is longer than a dimension L1 of the block 100 along the tire circumferential direction TC. That is, the block 100 is elongated in tire width direction.

A ratio W2/W1 between a width W2 of the small block 101 in the tire width direction and the width W1 of the block 100 in the tire width direction is 0.25 or more and 0.50 or less. The ratio W2/W1 is more preferably 0.30 or more and 0.45 or less. A ratio L2/L1 between a length L2 of the small block 101 in the tire circumferential direction TC and the length L1 of the block 100 in the tire circumferential direction TC is preferably 0.1 or more and 0.5 or less, preferably 0.15 or more and 0.45 or less. The L2/L1 is preferably smaller than the W2/W1.

As illustrated in FIG. 2, the width W1, the width W2, the length L1, and the length L2 are based on the tire width direction WD and the tire circumferential direction TC. The width W2 of the small block 101 may be based on a distance from an end in the tire width direction to a center in the tire width direction of the zigzag shape of the circumferential sipe 120 in the small block 101, or may be based on a distance between centers of the two circumferential sipes 120 adjacent to the small block 101.

A height of the block 100, that is, depths of the circumferential grooves 41, 42 and the circumferential groove 61 in the block 100 may not be constant, but may be about 6 mm to 12 mm.

A cross-sectional secondary moment in a height direction of the small block 101 is not less than 150 ($mm^4$) and not more than 2200 ($mm^4$). The preferred range of the width W2 and the length L2 of the small block 101 is width W2 = 9mm to 15mm and length L2 = 6mm to 12mm.

The cross-sectional second moment is preferably 300 ($mm^4$) to 1500 ($mm^4$) and more preferably 500 ($mm^4$) to 1000 ($mm^4$). The small block 101 in the block 100 that is adjacent to the circumferential grooves 41 and 42 is formed in columnar shape having a trapezoidal shape in the tread plane view, and the cross-sectional second moment of the small block 101 is obtained by Equation 1.

cross-sectional second moment I = $\{(a^2+4a*b+b^2)*h^3\}/(36a+36b)$ Equation 1:

As illustrated in FIG. 2, "a" in Equation 1 is a length of an upper base of the small block 101, which has the trapezoidal shape in the tread plane view, "b" is a length of an lower base, and "h" is a height of the block 1 in a direction perpendicular to the lateral sipe 130.

A shape of the small block 101 having both ends delimited by the circumferential sipes 120 is formed in columnar shape having a parallelogram shape in the tread plane view, and a cross-sectional second moment of the small block 101 is obtained by (Equation 2). [0068]

$$\text{Cross-sectional second moment I} = (W2*L2^3)/12 \qquad\qquad \text{Equation 2:}$$

A relationship between the length L2 and the width W2 of the small block 101 is preferably $1.0 \le W2/L2 \le 1.5$. By setting W2/L2 to 1.0 or more, the ground contact characteristics is improved and the on-ice performance is improved. In addition, by setting W2/L2 to 1.5 or less, water generated on a road surface R can be dewatered, and the on-ice performance is improved.

(5)Action and effect

According to the above-described embodiment, not according to the invention, but useful for understanding the invention, following action effects can be obtained. Specifically, the block 100 (as well as other blocks) is partitioned into a plurality of small blocks 101 by the circumferential sipes 120 and the lateral sipes 130. The circumferential sipe 120 and the lateral sipe 130 have a constant groove width GW1 from the tread side to the bottom.

That is, since the circumferential sipe 120 and the lateral sipe 130 having a constant groove width GW1 extend to the bottom in the tire circumferential direction TC and the tire width direction WD, respectively, the edge pressure at an end part in the tire circumferential direction TC and the tire width direction WD of the block 100 can be secured. In addition, since an edge part of the block 100 is divided (delimited) by the circumferential sipe 120, the water removal performance from the tread surface of the block 100 can also be secured.

In addition, since sufficient edge pressure is secured in the small block 101 forming the end part of the block 100 in the tire circumferential direction TC as described above, especially a traction on the ice/snow road surface increases, and the braking and driving performance can be effectively enhanced. Furthermore, the other small block 101 provided at a rear of the small block 101 forming the end part of the block 100 in the tire circumferential direction TC can firmly contact the road surface.

Thus, each of the plurality of small blocks 101 does not aim at "ground contact characteristics", "edge effect" and "water removal (drainage) ", but shares roles of "ground contact characteristics", "edge effect " and" water removal (drainage) " for each small block 101 as described above.

Thus, according to the pneumatic tire 10, the on-ice performance can be improved when a tread pattern in which blocks having a relatively small ground area are densely disposed is utilized.

Further, the size ratio W2/W1 between the small block 101 and the block 100 is 0.25 or more and 0.50 or less, and the cross-sectional second moment in the height direction of the block 100 alone is 150 (mm$^4$) or more and 2200 (mm$^4$) or less.

Therefore, the respective performances of "ground contact characteristics", "edge effect", and "water removal (drainage)" can be achieved in high dimensions. Since the W2/W1 is 0.25 or more, sufficient ground contact characteristics and edge effect can be achieved without the size of the small block 101 being too small. Further, since the size of the small block 101 is not too large since the W2/W1 is 0.50 or less, sufficient ground contact characteristics can be achieved.

According to the pneumatic tire 10, by setting the dimension ratio W2/W1 and the flexural rigidity of single block 100 to be within the ranges described above, it is possible to enhance driving performance such as braking-driving performance and steering stability including not only on ice and snow road surfaces but also on dry road surfaces. That is, according to the pneumatic tire 10, even higher driving performance can be achieved when utilizing the tread pattern in which blocks having the relatively small ground area are densely disposed.

In the present embodiment, not according the invention, but useful for understanding the invention, the small block 101 (and other blocks and other small blocks are generally similar) is formed in columnar shape having a quadrangular shape in the tread plane view. Therefore, the adjacent small blocks 101 can efficiently support each other across the circumferential sipe 120 and the lateral sipe 130. In particular, the braking performance on the snow and ice road when traveling straight is such that each small block 101 not only supports each other with the small block 101 adjacent to the tire circumferential direction TC but also supports each other with the small block 101 adjacent to the tire width direction WD during braking, so that the flexural rigidity in the tire circumferential direction TC of each block 100 is enhanced. By enhancing the flexural rigidity in the tire circumferential direction TC, the ground contact characteristics of the tire can be further improved during braking.

In this embodiment, not according to the invention, but useful for understanding the invention, the ends of the lateral sipe 130 communicates with the circumferential groove 41 and the circumferential groove 42, and the ends of the circumferential sipe 120 communicates with the lateral grooves 61 formed adjacent to the block 100. As a result, sufficient water removal performance can be achieved while securing the rigidity (block rigidity) of the block 100.

The width W2 of the block 100 is larger than the length L2 of the block 100, and the block 100 elongated in tire width direction. As a result, the edge effect (which may be called the edge component) due to the end part in the tire circumferential direction TC of the block 100 is enhanced, and especially, the braking performance which is important on the ice and snow road surface can be effectively enhanced.

The lateral groove 61 and the lateral sipe 130 are inclined with respect to the tire width direction WD, and the lateral groove 61 and the lateral sipe 130 are parallel. As a result, partial wear of the block 100 and noise (pattern excitation sound) generated when the block 100 touches the road surface can be suppressed.

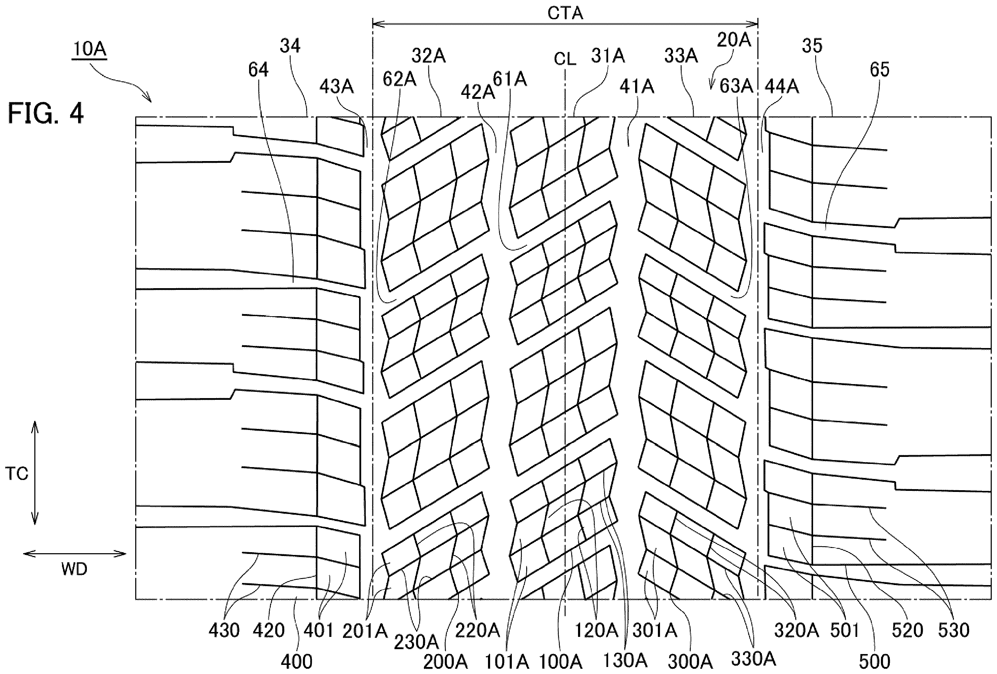

For example, the tread pattern of the pneumatic tire 10 described above may be changed as follows. FIG. 4 is a partial plan view of a tread 20A of a pneumatic tire 10A according to a variant 1.

As illustrated in FIG. 4, the pneumatic tire 10A includes block rows 31A, 32A, and 33A, each of which is a block group. The block row 31A includes a block 100A, the block row 32A includes a block 200A, and the block row 33A includes a block 300A.

Hereinafter, the block 100A will be described as an example. As illustrated in FIG. 4, the block 100A is partitioned into nine small blocks 101A by two circumferential sipes 120A and two lateral sipes 130A.

Compared with the block 100 of the embodiment, the variant 1 differs in that both ends in the tire width WD of the block 100A are formed in a zigzag shape parallel to the circumferential sipes 120A in the tread plane view. In the variant 1, the small blocks 101A adjacent to circumferential grooves 41A and 42A are also formed in a columnar shape having a parallelogram shape in the tread plane view. In the variant 1, since an end of the block 100A in the tire width direction has a zigzag shape, the tread 20A also differs from the tread 20 in the embodiment (not according to the invention, but useful for understanding the invention) in that the circumferential grooves 41A and 42A extend in a zigzag shape utilizing these surface as a groove wall.

As illustrated in FIG. 4, even in the pneumatic tire 10A, the block rows 31A, 32A, and 33A are provided only in the center portion CTA delimited by a pair of circumferential grooves 43A and 44A positioned outermost in the tire width direction disposed on either side of the tire equatorial line CL.

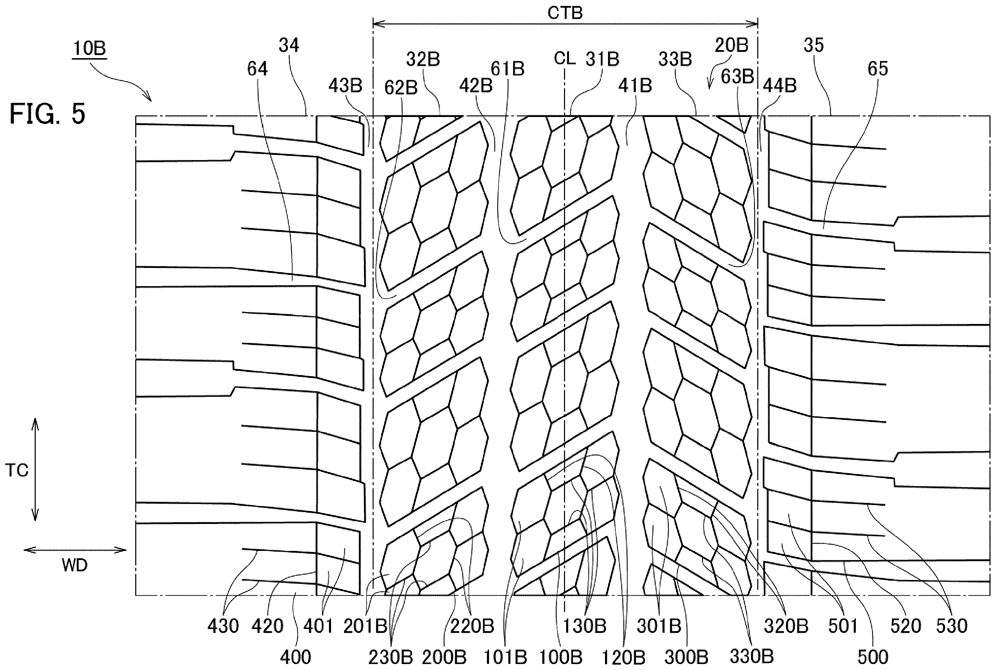

FIG. 5 is a partial plan view of the tread 20B of the tire 10B according to a variant 2 and according to the invention.

As illustrated in FIG. 5, the pneumatic tire 10B includes block rows 31B, 32B, and 33B, each of which is a block group. The block row 31B includes a block 100B, the block row 32B includes a block 200B, and the block row 33B includes a block 300B.

Hereinafter, the block 100B will be described as an example. As illustrated in FIG. 5, the block 100B is partitioned into seven small blocks 101B by two circumferential sipes 120B and four lateral sipes 130B.

Compared with the block 100 of the embodiment, the variant 2 differs in that the small blocks 101B includes a small block formed in a columnar shape having a hexagonal shape (hexagonal in the tread plane view).

Specifically, as illustrated in FIG. 5, the block 100B is delimited by the circumferential sipe 120B extending in a zigzag shape and communicating with adjacent lateral grooves 61B at both ends, and a plurality of lateral sipes 130B terminating in the block 100B at least at one end. An end of the lateral sipe 130B terminating in the block 100B communicates with the circumferential sipe 120B at a position where the circumferential sipe 120B bends.

In the variant 2, the ends of the lateral sipe 130B communicate with nearest bend position of the two circumferential sipes 120B in the tire width direction, or communicate with a nearest bend position of the circumferential grooves 41B or 42B and a nearest bend position of the circumferential sipe 120B from the circumferential grooves 41B and 42B in the tire width direction, so that small blocks 101B are formed in hexagonal columnar shape.

Compared with the block 100 of the embodiment, in the variant 2, since the small block 101B located at the end in the tire width direction WD has the hexagonal columnar shape, the tread 20B also differs from the tread 20 of the embodiment in having the circumferential grooves 41B and 42B extending in a zigzag shape.

As illustrated in FIG. 5, even in the pneumatic tire 10B, the block rows 31B, 32B, and 33B are provided only in the center portion CTB delimited by a pair of circumferential grooves 43B and 44B positioned outermost in the tire width direction disposed on either side of the tire equatorial line CL.

According to the pneumatic tire 10B of the variant 2, since adjacent two small blocks 101B supports each other in the tire width direction WD in each block during cornering, not only the flexural rigidity in the tire circumferential direction TC of each block 100B but also the flexural rigidity in the tire width direction WD is enhanced.

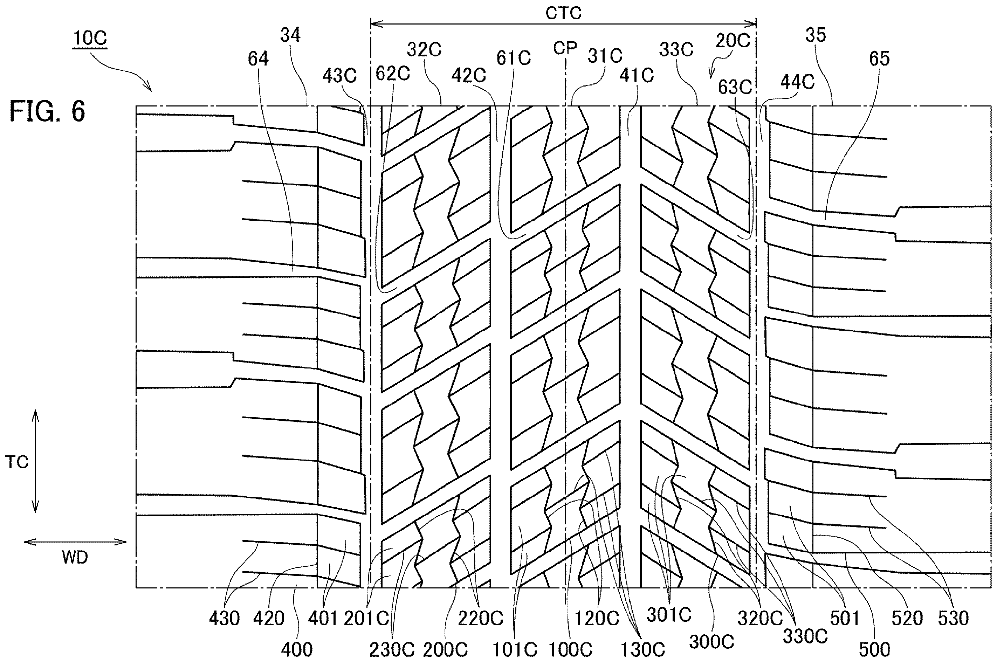

FIG. 6 is a partial plan view of a tread 20C of a tire 10C according to a variant 3, not according to the invention, but useful for understanding the invention.

As illustrated in FIG. 6, the pneumatic tire 10C includes block rows 31C, 32C, and 33C, each of which is a block group. The block row 31 C includes a block 100C, the block row 32C includes a block 200C, and the block row 33C includes a block 300C.

Hereinafter, the block 100C will be described as an example. As illustrated in FIG. 6, the block 100C is partitioned into eight small blocks 101C by two circumferential sipes 120C and five lateral sipes 130C.

Compared with the block 100 of the embodiment, not according to the invention, but useful for understanding the invention, in the variant 3, the small blocks 101C are different in that it includes a small block whose block width at both ends of the tire circumferential TC is wider than the block width at the center in the tread plane view.

Specifically, each block 100C is formed in a parallelogram shape in the tread plane view as illustrated in FIG. 6. The block 100C is delimited by circumferential sipes 120C extending in a zigzag shape and communicating with adjacent lateral grooves 61C at both ends, and lateral sipes 130C having at least one end terminating in the block 100C. The end of the lateral sipe 130C terminating in the small block 101 C communicates with the circumferential sipe 120C at a position where the circumferential sipe 120C bends.

In the variant 3, both ends of the lateral sipe 130C terminating in the block 100C communicate with a furthest bend position of the two circumferential sipes 120C in the tire width direction. One end of the lateral sipe 130C having only one end terminating in the block 100C communicates with the circumferential grooves 41C, 42C and the other end communicates with a furthest bend position from the circumferential grooves 41C, 42C in the tire width direction of the circumferential sipe 120 C.

Therefore, while the block 100B of the variant 2 includes the columnar hexagonal small block 101B, the block 100C of the block row 31C formed on the tread 20C of the variant 3 includes the small block having a shape in the tread plane view, whose block widths at both ends of the tire circumferential direction TC is wider than the block width at the center.

As illustrated in FIG. 6, even in the pneumatic tire 10C, the block rows 31C, 32C, and 33C are provided only in a center portion CTC delimited by a pair of circumferential grooves 43C and 44C positioned outermost in the tire width direction disposed on either side of the tire equatorial line CL.

According to the pneumatic tire 10C according to the variant 3, the cross-sectional second moment in a height direction of the small block 101C alone increases, and a collapsing of the small block 101C can be suppressed and improves a friction force on ice.

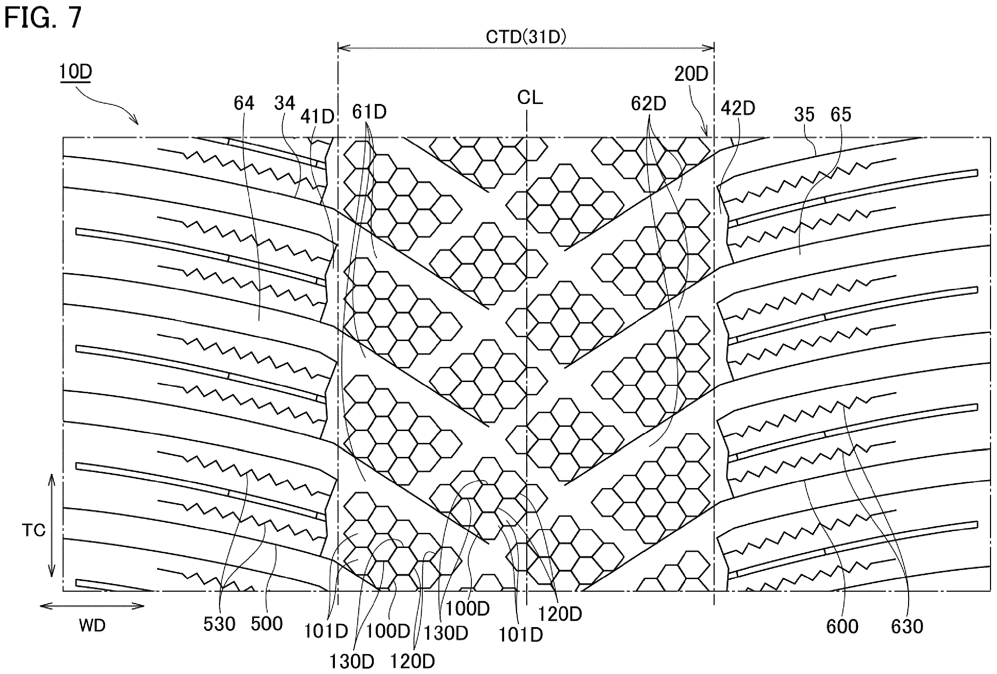

FIG. 7 is a partial plan view of the tread 20D of the tire 10D according to a variant 4 and according to the invention.

As illustrated in FIG. 7, the pneumatic tire 10D includes a block group 31D in entire center portion CTD delimited by a pair of circumferential grooves 41D and 42D positioned on either side of the tire equatorial line CL. The block group 31D includes a plurality of blocks 100D delimited by a plurality of lateral grooves 61D inclined with respect to the tire width direction WD and communicating with the circumferential grooves 41D but not communicating with the circumferential grooves 42D, and a plurality of lateral grooves 62D inclined with respect to the tire width direction WD in the opposite direction to the lateral grooves 61D and communicating with the circumferential grooves 42D but not communicating with the circumferential grooves 41D.

As illustrated in FIG. 7, the block 100D not adjacent to the circumferential grooves 41D, 42D is partitioned into nine small blocks 101D by four circumferential sipes 120D and four lateral sipes 130D.

The block 100D adjacent to the circumferential grooves 41D, 42D is partitioned into twelve small blocks 101D by four circumferential sipes 120D and seven lateral sipes 130D.

Specifically, as illustrated in FIG. 7, whether the block 100D is not adjacent to the circumferential grooves 41D, 42D or adjacent to the circumferential grooves 41D, 42D, the block 100D is delimited by circumferential sipes 120D extending in a zigzag shape and communicating with the adjacent lateral grooves 61D, 62D at both ends, and a plurality of lateral sipes 130D terminating in the block 100D at least at one end. The ends of the lateral sipes 130D terminating in the small block 101D communicate with the circumferential sipe 120D at each position where the circumferential sipe 120D bends.

In the variant 4, the ends of the lateral sipes 130D communicate with the closest bend positions of the two circumferential sipes 120D in the tire width direction, so that each small block 101D is formed in a hexagonal columnar shape.

Comparing the tread 20 of the embodiment with the tread 20D of the variant 4, the tread 20 of the embodiment has a plurality of block groups (block rows 31,32,33) arranged in the center portion CTD, but the tread 20D of the variant 4 has a single block group 31D arranged in the entire center portion CTD.

Further, the block group 31D is delimited to a plurality of blocks 100D by a plurality of lateral grooves 61D, 62D intersecting each other, which is different from the block rows 31,32,33 of the embodiment in which the block rows 31 are partitioned into a plurality of blocks 100 by lateral grooves 61 parallel to each other.

According to the pneumatic tire 10D of the variant 4, since each block supports adjacent two small blocks 101D in the tire width-direction WD during cornering, not only the flexural rigidity of the tire circumferential direction TC of each block 100D but also the flexural rigidity of the tire width direction WD is enhanced.

As illustrated in FIG. 7, even in the pneumatic tire 10D, the block group 31D is provided only in the center portion CTD delimited by a pair of circumferential grooves 41D and 42D located outermost in the tire width direction disposed on either side of the tire equatorial line CL.

Further, according to the pneumatic tire 10D of the variant 4, since the block group 31D arranged in the center portion CTD has a plurality of lateral grooves 61D and 62D intersecting each other, it is possible to ensure high drainage during straight traveling.

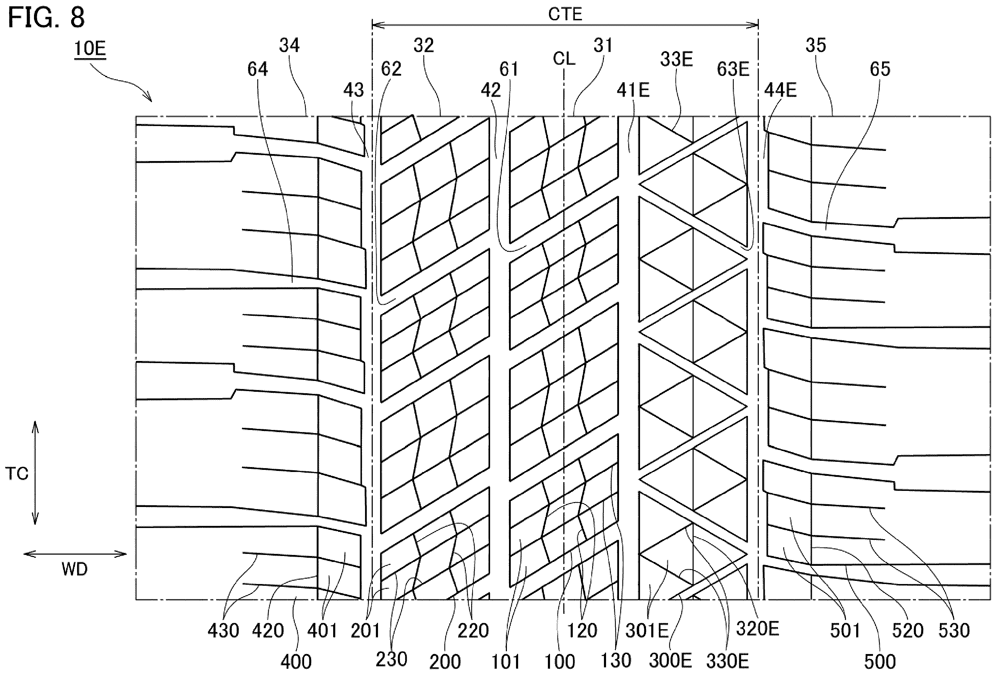

FIG. 8 is a partial plan view of the tread 20E of the pneumatic tire 10E according to a variant 5, not according to the invention, but useful for understanding the invention.

As illustrated in FIG. 8, the pneumatic tire 10E includes block rows 31 and 32, each of which is a block group. The block row 31 includes a block 100, and the block row 32 includes a block 200.

As illustrated in the variant 5 of FIG. 8, the pneumatic tire 10E may be provided with a block row 33E, instead of the block 300 included in the block row 33 of the pneumatic tire 10 of the embodiment, with a block 300E partitioned into a plurality of small blocks 301E by a circumferential sipe 320E extending parallel to the tire circumferential direction TC, and a plurality of lateral sipes 330E including a first lateral sipe and a second lateral sipe extending in different directions.

## Claims

1. A tire (10B, 10D) comprising a block group (31B-33B, 31D) delimited by a pair of circumferential grooves (41B-44B, 41D-42D) extending in a tire circumferential direction (TC), wherein

   the block group (31B-33B, 31D) includes a plurality of blocks (100B, 200B, 300B, 100D) delimited by a plurality of lateral grooves (61B-63B, 61D-62D) extending in a tire width direction (WD),
   each block (100B, 200B, 300B, 100D) of the plurality of blocks (100B, 200B, 300B, 100D) is partitioned into a plurality of small blocks (101B, 201B, 301B, 101D) by a circumferential sipe (120B, 220B, 320B, 120D) extending in the tire circumferential direction (TC) and a plurality of lateral sipes (130B, 230B, 330B, 130D) extending in the tire width direction (WD), and
   in each block (100B, 200B, 300B, 100D) of the plurality of blocks(100B, 200B, 300B, 100D),

      the circumferential sipe (120B, 220B, 320B, 120D) extends in a zigzag pattern, and
      at least outermost lateral sipes (130B, 230B, 330B, 130D) of the plurality of lateral sipes (130B, 230B, 330B, 130D) in the tire circumferential direction (TC) extend parallel to each other,

   a shape of each small block (101B, 201B, 301B, 101D) in the plurality of small blocks (101B, 201B, 301B, 101D) is a polygon bounded by at least four sides in a tread plane view, and
   the plurality of small blocks (101B, 201B, 301B, 101D) comprises a first small block (101B, 201B, 301B, 101D) with a hexagonal shape in the tread plane view.

2. The tire (10B, 10D) according to claim 1, wherein
   the block group (31B-33B, 31D) is provided only in a center portion (CTB, CTD) delimited by a pair of circumferential grooves (43B-44B, 41D-42D) located outermost in the tire width (WD) direction disposed on either side of a tire equatorial line (CL).

3. The tire (10B, 10D) according to claim 1 or claim 2, wherein

   the circumferential sipe (120B, 220B, 320B, 120D) has a constant groove width (GW1) from a tread side to a bottom, and
   each of the plurality of lateral sipes (130B, 230B, 330B, 130D) has a constant groove width (GW1) from the tread side to the bottom.

## Patentansprüche

1. Reifen (10B, 10D), der eine Blockgruppe (31B-33B, 31D) umfasst, die durch ein Paar umlaufender Rillen (41B-44B, 41D-42D) begrenzt wird, die sich in Umfangsrichtung (TC) des Reifens erstrecken, wobei

   die Blockgruppe (31B-33B, 31D) eine Vielzahl von Blöcken (100B, 200B, 300B, 100D) beinhaltet, die durch eine Vielzahl von seitlichen Rillen (61B-63B, 61D-62D) begrenzt sind, die sich in Breitenrichtung (WD) des Reifens erstrecken,
   jeder Block (100B, 200B, 300B, 100D) der Vielzahl von Blöcken (100B, 200B, 300B, 100D) durch eine sich in der Umfangsrichtung (TC) des Reifens erstreckende umlaufende Lamelle (120B, 220B, 320B, 120D) und eine Vielzahl von sich in der Breitenrichtung (WD) des Reifens erstreckenden seitlichen Lamellen (130B, 230B, 330B, 130D) in eine Vielzahl kleiner Blöcke (101B, 201B, 301B, 101D) unterteilt ist, und
in jedem Block (100B, 200B, 300B, 100D) der Vielzahl von Blöcken (100B, 200B, 300B, 100D),
die umlaufende Lamelle (120B, 220B, 320B, 120D) sich in einem Zickzackmuster erstreckt, und
mindestens äußerste seitlichen Lamellen (130B, 230B, 330B, 130D) der Vielzahl seitlicher Lamellen (130B, 230B, 330B, 130D) in der Umfangsrichtung (TC) des Reifens sich parallel zueinander erstrecken,
eine Form jedes kleinen Blocks (101B, 201B, 301B, 101D) in der Vielzahl kleiner Blöcke (101B, 201B, 301B, 101D) ein in einer Lauffflächendraufsicht durch mindestens vier Seiten begrenztes Polygon ist, und
die Vielzahl kleiner Blöcke (101B, 201B, 301B, 101D) einen ersten kleinen Block (101B, 201B, 301B, 101D) mit einer hexagonalen Form in der Lauffflächendraufsicht umfasst.

2. Reifen (10B, 10D) nach Anspruch 1, wobei
die Blockgruppe (31B-33B, 31D) nur in einem mittleren Abschnitt (CTB, CTD) bereitgestellt ist, der von einem Paar umlaufenden Rillen (43B-44B, 41D-42D) begrenzt wird, die sich ganz außen in Richtung der Reifenbreite (WD) befinden und auf beiden Seiten einer Reifenäquatorlinie (CL) angeordnet sind.

3. Reifen (10B, 10D) nach Anspruch 1 oder Anspruch 2, wobei

die umlaufende Lamelle (120B, 220B, 320B, 120D) eine konstante Rillenbreite (GW1) von einer Lauffflächenseite zu einer Unterseite aufweist, und
jede der Vielzahl von seitlichen Lamellen (130B, 230B, 330B, 130D) eine konstante Rillenbreite (GW1) von der Lauffflächenseite bis zur Unterseite aufweist.


## Revendications

1. Pneu (10B, 10D) comprenant un groupe de blocs (31B-33B, 31D) délimité par une paire de rainures circonférentielles (41B-44B, 41D-42D) s'étendant dans la direction circonférentielle du pneu (TC), dans lequel

le groupe de blocs (31B-33B, 31D) inclut une pluralité de blocs (100B, 200B, 300B, 100D) délimités par une pluralité de rainures latérales (61B-63B, 61D-62D) s'étendant dans la direction de la largeur du pneu (WD), chaque bloc (100B, 200B, 300B, 100D) de la pluralité de blocs (100B, 200B, 300B, 100D) est divisé en une pluralité de petits blocs (101B, 201B, 301B, 101D) par une lamelle circonférentielle (120B, 220B, 320B, 120D) s'étendant dans la direction circonférentielle du pneu (TC) et une pluralité de lamelles latérales (130B, 230B, 330B, 130D) s'étendant dans la direction de la largeur du pneu (WD), et
dans chaque bloc (100B, 200B, 300B, 100D) de la pluralité de blocs (100B, 200B, 300B, 100D),
la lamelle circonférentielle (120B, 220B, 320B, 120D) s'étend en zigzag, et
au moins les lamelles latérales les plus extérieures (130B, 230B, 330B, 130D) de la pluralité de lamelles latérales (130B, 230B, 330B, 130D) dans la direction circonférentielle du pneu (TC) s'étendent parallèlement les unes aux autres,
une forme de chaque petit bloc (101B, 201B, 301B, 101D) dans la pluralité de petits blocs (101B, 201B, 301B, 101D) est un polygone délimité par au moins quatre côtés dans une vue en plan de bande de roulement, et
la pluralité de petits blocs (101B, 201B, 301B, 101D) comprend un premier petit bloc (101B, 201B, 301B, 101D) de forme hexagonale dans la vue en plan de bande de roulement.

2. Pneu (10B, 10D) selon la revendication 1, dans lequel
le groupe de blocs (31B-33B, 31D) est fourni uniquement dans une partie centrale (CTB, CTD) délimitée par une paire de rainures circonférentielles (43B-44B, 41D-42D) situées le plus à l'extérieur dans la direction de la largeur du pneu (WD) disposées de chaque côté d'une ligne équatoriale du pneu (CL).

3. Pneu (10B, 10D) selon la revendication 1 ou la revendication 2, dans lequel

la lamelle circonférentielle (120B, 220B, 320B, 120D) présente une largeur de rainure constante (GW1) depuis un côté de bande de roulement jusqu'à un fond, et
chacune de la pluralité de lamelles latérales (130B, 230B, 330B, 130D) présente une largeur de rainure constante (GW1) depuis le côté de bande de roulement jusqu'au fond.

FIG. 1

FIG. 2

FIG. 3

FIG. 4

10A

CTA

34    64    43A    32A    62A    42A    61A    CL    31A    41A    33A    20A    63A    44A    35    65

TC

WD

430  420  401  201A  230A  220A  120A  301A  320A  501  520  530
     400       200A  101A  100A  130A  300A  330A       500

EP 4 357 162 B1

FIG. 5

10B

34  64  43B  32B  62B  42B  61B  CL  31B  33B  20B  63B  44B  35  65

CTB

TC

WD

430  420  401  201B  220B  130B  301B  320B  501  520  530
400  230B  200B  101B  100B  120B  300B  330B  500

EP 4 357 162 B1

FIG. 6

FIG. 7

EP 4 357 162 B1

FIG. 8

**EP 4 357 162 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4676290 A
- EP 2546078 A1
- EP 2546076 A1
- JP 2017193202 A